Europäisches Patentamt

European Patent Office

Office européen des brevets

(11) Veröffentlichungsnummer: **0 152 050**
**A1**

(12) # EUROPÄISCHE PATENTANMELDUNG

(21) Anmeldenummer: 85101170.0

(22) Anmeldetag: 05.02.85

(51) Int. Cl.⁴: **G 06 K 13/14**

(30) Priorität: 16.02.84 DE 8404672 U

(43) Veröffentlichungstag der Anmeldung:
21.08.85 Patentblatt 85/34

(84) Benannte Vertragsstaaten:
BE DE FR GB IT

(71) Anmelder: AGFA-GEVAERT Aktiengesellschaft

D-5090 Leverkusen 1(DE)

(72) Erfinder: Hofmann, Wilfried, Dipl.-Ing.
Am Heimgarten 57
D-8028 Taufkirchen(DE)

(72) Erfinder: Holzmann, Andreas, Dipl.-Ing.
Landshuter Strasse 12
D-8301 Bruckberg(DE)

(72) Erfinder: Koopmann, Adolf, Dipl.-Ing.
Talstrasse 9
D-8195 Egling/Deining(DE)

(72) Erfinder: Meggendorfer, Ruth, Dipl.-Ing.
Grünauer Allee 33
D-8025 Unterhaching(DE)

(72) Erfinder: Sylla, Jürgen, Dipl.-Ing.
Amselweg 18
D-8029 Sauerlach-Arget(DE)

(54) Mikrofichemagazin.

(57) Ein für die Verwendung mit einer automatischen Mikrofiche-Auswahlvorrichtung (Retrieval-Vorrichtung) geeignetes Mikrofichemagazin mit einem Aufnahmeteil für die Mikrofiche und einem schwenkbar daran gelagerten Deckel ist so ausgestaltet, daß das Aufnahmeteil (1) schachtelartig mit einem Boden (1a) und hochstehenden Seitenwänden (1b bis 1d) ausgebildet und an der der Scharnierseite (1d) gegenüberliegenden Seite offen ist und daß der Deckel (2) die Seitenwände (1b bis 1d) und die offene Seite des Aufnahmeteils (1) im geschlossenen Magazinzustand außen übergreifende Seitenwände (2a bis 2d) aufweist. Hierdurch entsteht ein Magazin, dem durch einfache Auswahl- und übliche Transportmittel ausgewählte Mikrofiche (3) entnehmbar bzw. wieder zuführbar sind.

FIG. 1

EP 0 152 050 A1

Croydon Printing Company Ltd.

0152050

AGFA-GEVAERT
Aktiengesellschaft

D-5090 Leverkusen 1

Patentabteilung

eh-se

## Mikrofichemagazin

Die Erfindung betrifft ein für die Verwendung mit einer automatischen Mikrofiche-Auswahlvorrichtung (Retrieval-Vorrichtung) geeignetes Mikrofichemagazin mit einem Aufnahmeteil für die Mikrofiche und einem schwenkbar daran gelagerten Deckel.

Mikrofichemagazine für den genannten Zweck sind in verschiedenen Ausführungsformen bekannt. So ist z. B. durch die DE-PS 23 43 671 ein vorn und hinten stirnseitig offenes Mikrofichemagazin bekannt, bei dem jeweils ein eingetaschter, ausgewählter Mikrofiche von hinten nach vorn aus dem Magazin gestoßen und wieder in umgekehrter Richtung zurückbefördert wird. Transportmittel für Fiche in einem derartigen Magazin sind raumgreifend und kompliziert. Es sind auch schon trogartige Magazine mit Deckel für Retrieval-Vorrichtungen beschrieben wor-

A-G 1936

den, die teilweise auch buchartig auseinander geschlagen werden können. Die Fichetransportvorrichtungen in Verbindung mit derartigen Trögen sind ebenfalls raumgreifend und aufwendig.

Der Neuerung liegt die Aufgabe zugrunde, ein Magazin der eingangs genannten Art zu schaffen, das platzsparend ausgebildet ist und dem durch einfache Auswahl- und übliche Transportmittel, wie Sauger oder Reibrollen, ausgewählte Mikrofiche entnehmbar bzw. wieder zuführbar sind.

Diese Aufgabe wird neuerungsgemäß gelöst durch die Merkmale des Hauptanspruchs. Weitere vorteilhafte Merkmale der Neuerung sind den Unteransprüchen entnehmbar.

Durch die haubenartige Ausbildung des Deckels und eine offene Stirnseite des Aufnahmeteils des neuerungsgemäßen Magazins wird erreicht, daß die im Magazin enthaltenen Mikrofiche im geschlossenen Magazinzustand gegen unbeabsichtigtes Herausfallen gesichert sind, beim Auseinanderklappen von Deckel und Aufnahmeteil in einem Gerät aber flach nach vorn durch beim Papiertransport übliche, niedrigbauende Transportmittel für Blattstapel herausgezogen und wieder hineingeschoben werden können. Auch die Mittel zum Aufklappen von Deckel und Aufnahmeteil an der Stelle eines ausgewählten Mikrofiches lassen sich niedrig und einfach ausbilden, wobei zugleich sichergestellt ist, daß Zwischenlagen mit Reitern für die Auswahl der einzelnen Mikrofiche nicht herausfallen oder versehentlich mit herausgezogen werden können.

A-G 1936

Die Neuerung wird anhand von Zeichnungen näher erläutert. Es zeigen

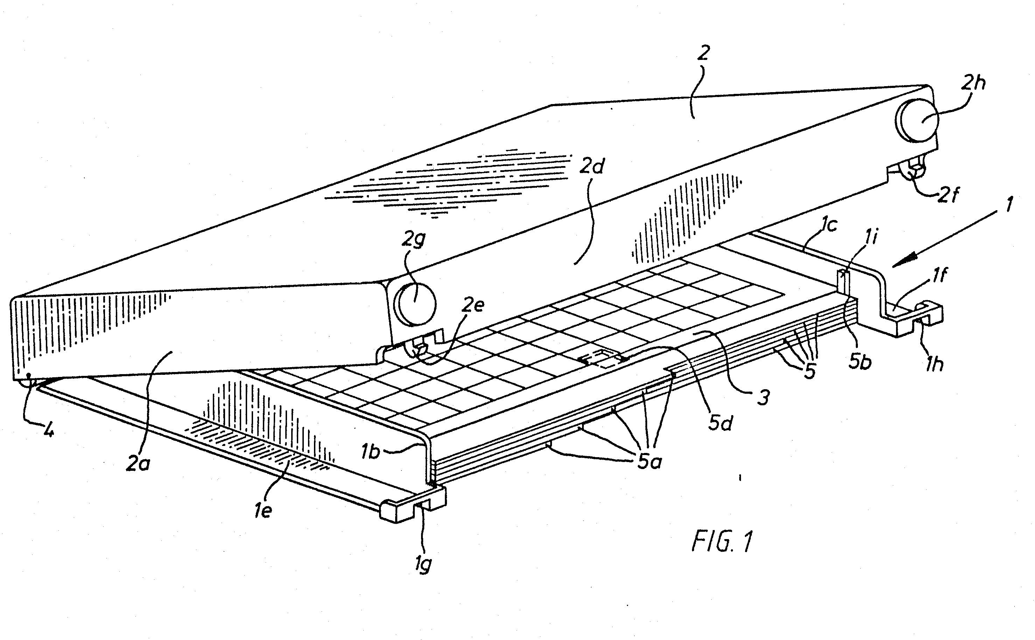

Fig. 1  eine perspektivische Darstellung eines etwas geöffneten, neuerungsgemäßen Mikrofichemagazins,

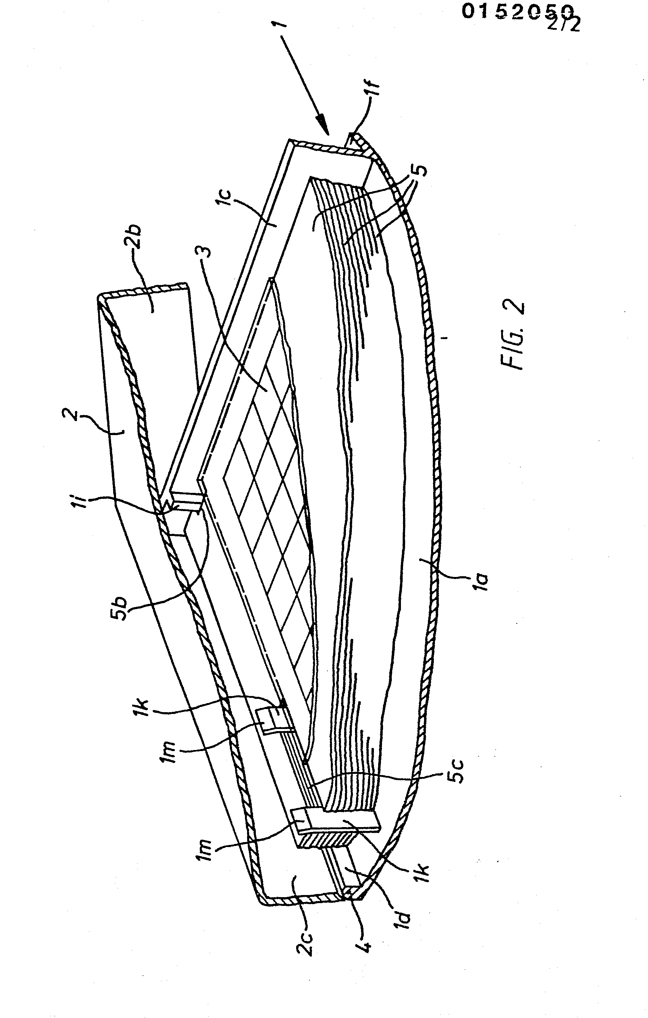

Fig. 2  eine zur Sichtbarmachung des Magazininnern abgebrochene, perspektivische Darstellung des Magazins nach Fig. 1.

Gemäß den Figuren weist ein vorzugsweise für die Verwendung in einer automatischen Mikroficheauswahleinrichtung (Retrieval-Vorrichtung) geeignetes Mikrofichemagazin, das jedoch auch als Aufbewahrungsmagazin verwendbar ist, ein Aufnahmeteil 1 für mehrere Mikrofiche 3 und einen über irgendein bekanntes Scharnier 4 schwenkbar daran gelagerten Deckel 2 auf. Das Aufnahmeteil 1 ist schachtelartig ausgebildet mit einem Boden 1a und mit drei hochstehenden Seitenwänden 1b, 1c, 1d und ist an der der Scharnierseite 1d gegenüberliegenden Stirnseite offen. Die zur Scharnierseite 1d senkrechten Seitenwände 1b, 1c haben mindestens die Höhe eines darin unterzubringenden Blattstapels, während die Rückwand 1d niedriger sein kann. Der Deckel 2 ist haubenartig ausgebildet und übergreift im geschlossenen Magazinzustand mit seinen Seitenwänden 2a bis 2d die Seitenwände 1b bis 1d und die offene Stirnseite des Aufnahmeteils 1. Der Boden 1a des Aufnahmeteils 1 steht über die zur offenen Stirnseite senkrechten Seitenwände 1b, 1c seitlich über und bildet somit seitliche Bodenstreifen 1e und 1f. Stirnseitig sind an

A-G 1936

den überstehenden Bodenstreifen 1e, 1f Rastausnehmungen 1g, 1h für am Deckel 2 angebrachte Verschlußriegel 2e, 2f angebracht, vorzugsweise angeformt. Außerdem sind an den Seitenwänden 1b, 1c zum Boden 1a senkrechte Rippen 1i ausgebildet, die als Führung und Halterung für den Blattstapel in später zu beschreibender Weise dienen. Zweckmäßigerweise sind sie symmetrisch zueinander angeordnet, wobei in den Fig. die Rippen 1i der Seitenwand 1b nicht sichtbar sind. Schließlich sind von der Rückwand 1d bzw. dem Scharnier 4 etwas beabstandet und etwa parallel hierzu zwei senkrecht vom Boden 1a hochstehende Stege 1k angebracht, deren freie Enden 1m gegen die Scharnierseite 1d, 2c zu abgeschrägt sind.

Zum Einlegen, Fixieren und leichteren Separieren der im Magazin unterzubringenden Mikrofiche 3 sind Zwischenlagen 5 lösbar im Aufnahmeteil 1 befestigt. Die Zwischenlagen 5 weisen stirnseitig gegeneinander versetzte Reiter oder Fahnen oder Abschnitte 5a auf, die stufenförmig zueinander ausgespart sind, so daß jede Zwischenlage 5 mit einem Wähler oder Taster einer Retrievalvorrichtung abgetastet werden und an der Stelle des zugeordneten, ausgewählten Mikrofiches 3 von den anderen Zwischenlagen abgehoben werden kann. Damit nun die Zwischenlagen 5 trotz leichter Auswechselbarkeit nicht aus dem Aufnahmeteil 1 herausfallen können, weisen sie deckungsgleiche Randausnehmungen 5b auf, die im eingesetzten Zustand die Rippen 1i umgreifen. An der den Stegen 1k, 1m im eingesetzten Zustand entsprechenden Stelle tragen die Zwischenlagen 5 deckungsgleiche Schlitze 5c. Diese werden an den Stegen 1k, 1m eingehängt, wobei Stege und Schlitze zusammen je eine schar-

A-G 1936

nierartige Verbindung für jede Zwischenlage 5 bilden,
um die eine ausgewählte Zwischenlage zum Freilegen
eines zwischen ihr und der nächsten Zwischenlage eingelegten Mikrofiches schwenkbar ist. Dabei verhindern die
Schrägflächen 1m, daß sich beim Hochschwenken die Zwischenlagen 5 von den Stegen 1k aushängen.

Die Abmessungen bzw. Abstände der Rippen 1i sind zweckmäßigerweise so bemessen, daß die Mikrofiche 3 innerhalb derselben liegen, also ebenfalls gegen unbeabsichtigtes Herausfallen gesichert sind. Zum Entnehmen eines
aufgeklappt liegenden Mikrofiches 3 muß dieser durch
die Transportmittel also etwas angehoben werden, um
über die der Stirnseite benachbarten, seitlichen Rippen 1i transportiert werden zu können. Hierzu ist es
günstig, wenn die Zwischenlagen 5 im Bereich der Vorderkanten der eingelegten Mikrofiche 3, also unter-
oder oberhalb derselben und vorzugsweise innerhalb der
Rippen 1i je einen weiteren, untereinander deckungsgleichen Durchbruch 5d aufweisen, durch die eine Hebe- oder Greifervorrichtung zum Anheben und Bewegen
eines ausgewählten Mikrofiches bis zu außerhalb des Magazins liegenden Transportmitteln bewegbar bzw. zurück
in das Magazin schiebbar ist.

Selbstverständlich sind noch andere, der Einfachheit
halber nicht oder nicht detailliert dargestellte Ausgestaltungen nach der Neuerung möglich. So ist es vorteilhaft, die Verschlußriegel 2e, 2f federnd und an Betätigungsdruckknöpfen 2g, 2h anliegend auszubilden, so
daß ein geschlossenes Magazin 1, 2 in einer Retrieval-

A-G 1936

Vorrichtung automatisch durch Druck auf die Druckknöpfe 2g, 2h zu öffnen ist. An die Stelle der Stege 1k, 1m und Schlitze 5c könnten auch Einhängevorrichtungen mit Löchern, wie sie bei Ordnern üblich sind, treten. Zweckmäßigerweise sind im Deckel 2 in in den Fig. nicht sichtbarer Weise von diesem nach unten vorstehende Blattfedern angebracht, die im geschlossenen Zustand des Magazins den aus Zwischenlagen 5 und Mikrofichen 3 bestehenden Blattstapel zusammendrücken. Dies ist besonders dann von Bedeutung, wenn das Magazin nicht voll angefüllt ist.

A-G 1936

Ansprüche

1. Für die Verwendung mit einer automatischen Mikrofiche-Auswahlvorrichtung (Retrieval-Vorrichtung) geeignetes Mikrofichemagazin mit einem
   Aufnahmeteil für die Mikrofiche und einem
   schwenkbar daran gelagerten Deckel, dadurch
   gekennzeichnet, daß das Aufnahmeteil (1)
   schachtelartig mit einem Boden (1a) und hochstehenden Seitenwänden (1b bis 1d) ausgebildet
   und an der der Scharnierseite (1d) gegenüberliegenden Seite offen ist und daß der
   Deckel (2) die Seitenwände (1b bis 1d) und die
   offene Seite des Aufnahmeteils (1) im geschlossenen Magazinzustand außen übergreifende Seitenwände (2a bis 2d) aufweist.

2. Magazin nach Anspruch 1, dadurch gekennzeichnet, daß der Boden (1a) des Aufnahmeteils (1)
   über die zur offenen Seite senkrechten Seitenwände (1b, 1c) übersteht und stirnseitig an den
   überstehenden Bodenstreifen (1e, 1f) Verriegelungselemente (1g, 1h) einer Verriegelungsvorrichtung (1g, 2e, 1h, 2f) für Aufnahmeteil (1)
   und Deckel (2) angebracht sind.

3. Magazin nach einem der vorhergehenden Ansprüche, dadurch gekennzeichnet, daß die bodenseitigen Verriegelungselemente (1g, 1h) durch
   Rastausnehmungen gebildet werden und daß am

A-G 1936

Deckel (2) korrespondierende Riegelhaken (2e, 2f)schwenkbar gelagert sind, die mit
außen an der stirnseitigen Deckelwand (2d) zugänglichen, federnden Betätigungsknöpfen (2g, 2h) gekoppelt sind.

4.   Magazin nach einem der vorhergehenden Ansprüche, dadurch gekennzeichnet, daß im Aufnahmeteil (1) innerhalb der Seitenwände (1b, 1c)
stirnseitig mit gegeneinander versetzten Reitern oder vorstehenden Fahnen (5a) versehene
Zwischenlagen (5) schwenkbar und lösbar befestigt sind.

5.   Magazin nach Anspuch 4 oder einem anderen der
vorhergehenden Ansprüche, dadurch gekennzeichnet, daß die Zwischenlagen (5) an ihren zu ihren mit den Fahnen (5a) versehenen Stirnseiten
senkrechten Kanten deckungsgleiche Ausnehmungen (5b) aufweisen und daß an den entsprechenden Seitenwänden (1b, 1c)des Aufnahmeteils (1)
korrespondierende, zum Boden (1a) senkrechte
Rippen (1i) vorgesehen sind, die in die Ausnehmungen (5b) eingreifen.

6.   Magazin nach einem der vorhergehenden Ansprüche, dadurch gekennzeichnet, daß die Zwischenlagen (5) parallel zu ihren scharnierseitigen
Kanten deckungsgleiche Schlitze (5c) aufweisen,
in die am Boden (1a) angeordnete, senkrecht
hierzu hochstehende Stege (1k) oder Stifte oder

A-G 1936

dgl. eingreifen, die zusammen mit den Schlitzen (5c) je ein Scharnier für eine Zwischenlage (5) bilden.

7.  Magazin nach Anspruch 6, dadurch gekennzeichnet, daß die freistehenden Enden (1m) der gleich ausgebildeten Stege (1k) gegen die Scharnierseite (1d, 2c) hin abgeschrägt sind.

8.  Magazin nach einem der vorhergehenden Ansprüche, dadurch gekennzeichnet, daß die Zwischenlagen (5) nahe der offenen Stirnseite des Aufnahmeteils (1) je wenigstens einen mit denen der anderen Zwischenlagen (5) deckungsgleichen Durchbruch (5d) aufweisen.

9.  Magazin nach einem der vorhergehenden Ansprüche, dadurch gekennzeichnet, daß an der Deckelflachseite innen eine gegen die Zwischenlagen (5) vorstehende Andruckfeder vorgesehen ist.

Hierzu  2  Blatt Zeichnungen

A-G 1936

FIG. 1

0152050

A-G 193€

FIG. 2

0152050/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-A-2 744 380 (F. NIGGELOH) * Figur * | 1-3 | G 06 K 13/14 |
| D,A | DE-A-2 343 671 (AGFA-GEVAERT AG) * Figur * | 1 | |

---

---

RECHERCHIERTE SACHGEBIETE (Int. Cl.4)

G 03 B 23/02
G 06 K 13/14
G 06 K 17/00

Der vorliegende Recherchenbericht wurde für alle Patentansprüche erstellt.

| Recherchenort BERLIN | Abschlußdatum der Recherche 07-05-1985 | Prüfer ZOPF K |
|---|---|---|